# EUROPEAN PATENT APPLICATION

(11) **EP 4 700 909 A1**
(43) Date of publication of application: **25.02.2026**
(21) Application number: 24795486.0
(22) Date of filing: 26.01.2024
(51) Int. Cl.: H01M 10/613, H01M 10/617, H01M 10/653

(54) **BATTERY PACK**

(30) Priority: 26.04.2023 CN 202310465196
(71) Applicant: Xiamen Hithium Energy Storage Technology Co., Ltd., Xiamen, Fujian 361100 (CN)
(72) Inventor: ZHENG, Zhenhua, Xiamen, Fujian 361100 (CN)
(74) Representative: Mewburn Ellis LLP
(86) International application number: PCT/CN2024/074201
(87) International publication number: WO 2024/222097

(57) **Abstract**

The present disclosure relates to a battery pack (100). The battery pack (100) includes at least one battery module (10), a liquid cooling plate (20), the liquid cooling plate (20), and at least one first limiting member (30). The liquid cooling plate is arranged on a bottom surface of the at least one battery module (10). Each of the at least one first limiting member (30) is arranged between the liquid cooling plate (20) and a bottom surface of each of the at least one battery module (10), so that an adhesive gap (40) with a uniform thickness is defined between the liquid cooling plate (20) and the bottom surface of each of the at least one battery module (10). A thermal conductive adhesive is applied in the adhesive gap (40), and the liquid cooling plate (20) is in thermal communication with the at least one battery module (10) via the thermal conductive adhesive.

## Description

### CROSS-REFERENCE TO RELATED APPLICATION(S)

This application claims priority to Chinese Patent Application No. 2023104651960, filed with the Chinese Patent Office on April 26, 2013 and entitled "Battery Pack", which is incorporated herein by reference in its entirety.

### TECHNICAL FIELD

This disclosure relates to the field of battery technologies, and in particular, to a battery pack.

### BACKGROUND

Batteries are main power sources of new energy vehicles, and thus the working performance of the battery greatly affects the driving reliability of the new energy vehicle. In fact, many factors influence the operation performance of the battery, in which the influence of temperature on the performance and life of the battery is particularly obvious. When a vehicle runs under different working conditions, such as acceleration and deceleration, a battery discharges at different corresponding rates. During this process, the battery generates heat and the heat is continuously accumulated. If the heat is unable to be discharged in time, the accumulated heat will cause the temperature of the battery to be excessively high, which poses a risk to the service life of the battery and even the safe of the entire vehicle. Hence, a heat management system is generally installed for the battery to avoid the above problems.

A liquid cooling plate is a key component in the heat management system. The liquid cooling plate is generally installed on a bottom surface of a battery module, and exchanges heat with the battery module by using a flowing coolant, so as to achieve cooling and heat dissipation of the battery module. Furthermore, in order to improve cooling efficiency, a layer of thermal conductive adhesive is coated between the liquid cooling plate and the bottom surface of the battery module, so as to strengthen a heat transfer effect. However, in many cases, after the battery module and the liquid cooling plate are assembled, the misalignment of the battery module and the liquid cooling plate occurs, which results in an inconsistent fitting gap between the two and inconsistent adhesive thickness, a serious phenomenon of uneven heat dissipation of the battery module, and excessive localized temperature differentials of the battery module, thereby affecting a heat management effect and a battery cycle life.

### SUMMARY

Based on this, it is necessary to provide a battery pack with respect to the problems of uneven heat dissipation of the battery module caused by inconsistent adhesive thickness, affecting a heat management effect and a battery cycle life.

A technical solution is to be described as follows.

According to the first aspect of the present disclosure, a battery pack is provided. The battery pack includes at least one battery module, a liquid cooling plate, at least one first limiting member. The liquid cooling plate is arranged on a bottom surface of the at least one battery module. Each of the at least one first limiting member is arranged between the liquid cooling plate and a bottom surface of each of the at least one battery module, to define an adhesive gap with a uniform thickness between the liquid cooling plate and the bottom surface of each of the at least one battery module. A thermal conductive adhesive is applied in the adhesive gap, and the liquid cooling plate is in thermal communication with the at least one battery module via the thermal conductive adhesive.

When the battery pack of the above solution is assembled, at least one first limiting member is additionally arranged between the bottom surface of the at least one battery module and the liquid cooling plate. The at least one first limiting member supports and limits the at least one battery module above, so that an adhesive gap with a uniform thickness can be defined between the bottom surface of the at least one battery module and the liquid cooling plate. In this way, it can be ensured that the thickness of the thermal conductive adhesive subsequently applied in the adhesive gap is uniform and consistent, and during operation of the battery back, various parts of the at least one battery module can have uniform heat transfer with the liquid cooling plate through the thermal conductive adhesive. As such, the cooling effects of various parts of the at least one battery module are more consistent, thereby guaranteeing the uniformity of heat dissipation and reducing the temperature difference, improving the overall heat management efficiency of the battery pack, and guaranteeing the cycle life of the at least one battery module.

Details of one or more embodiments of the present disclosure are set forth in the accompanying drawings and description below. Other features, objects, and advantages of the present disclosure will become apparent from the description, accompanying drawings, and claims.

### BRIEF DESCRIPTION OF THE DRAWINGS

For a better description and illustration of embodiments and/or examples of the present disclosure, reference may be made to one or more of the accompanying drawings. Additional details or examples used to describe the accompanying drawings will not be considered as limitations to the scope of any of the disclosure, presently described embodiments and/or examples, and the best mode presently for carrying out the disclosure.
FIG. 1 is a schematic structural view of a battery pack according to an embodiment of the present disclosure.
FIG. 2 is a schematic structural bottom view of FIG. 1.
FIG. 3 is a schematic cross-sectional structural view taken along line A-A in FIG. 2.
FIG. 4 is a schematic partial enlarged structural view of B in FIG. 3.
FIG. 5 is a structural schematic view of a battery module from a bottom perspective.
FIG. 6 is a schematic view of an assembly structure of a first supporting member and a first protective portion according to an embodiment of the present disclosure.

### Description of Reference Signs:

100: battery pack; 10: battery module; 11: bottom surface; 12: first side surface; 13: second side surface; 20: liquid cooling plate; 21: liquid inlet connector;22: liquid return connector; 23: plate body; 231: cooling flow channel; 231a: liquid inlet; 231b: liquid outlet; 231c: branch flow channel; 232: drainage flow channel; 233: convergence flow channel; 30: first limiting member; 31: first supporting member; 311a: supporting portion; 32: second supporting member; 40: adhesive gap; 50: lower case; 60: second limiting member; 61: first protective member; 62: second protective member.

### DETAILED DESCRIPTION

In order to facilitate understanding of the present disclosure, the present disclosure will be described more fully hereinafter with reference to the accompanying drawings. Preferred embodiments of the present disclosure are illustrated in the drawings, but the present disclosure may be implemented in many different forms and is not limited to the embodiments described herein. It can be appreciated that these embodiments are provided for a thorough understanding of the present disclosure.

In addition, terms such as "first" and "second" are used herein for the purpose of description and are not intended to indicate or imply relative importance or significance or to imply the number or sequence of indicated technical features. Thus, the features defined by "first" and "second" may explicitly or implicitly include at least one of the features. In the description of the present disclosure, "a plurality of" or "multiple" means at least two, for example, two, three, etc., unless specifically defined otherwise.

Unless defined otherwise, all technical and scientific terminologies used herein have the same meaning as commonly understood by one of ordinary skill in the art to which the present disclosure belongs. The terminologies used herein in the description of the present disclosure are for the purpose of describing particular embodiments only and are not intended to limit the present disclosure.

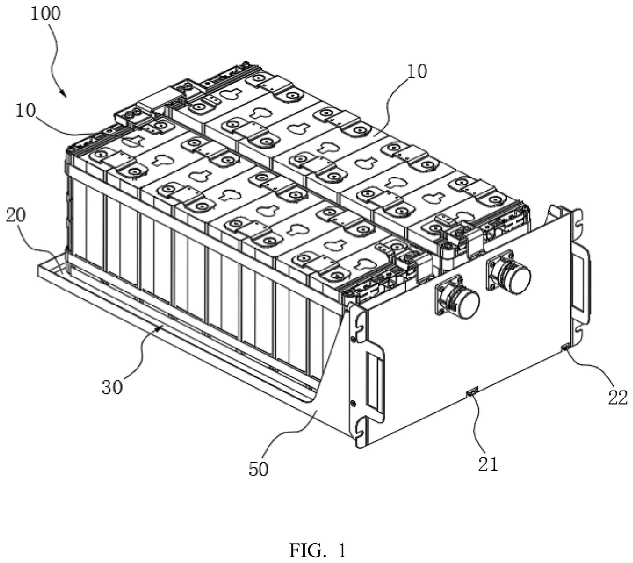

Reference is made to FIG. 1, which illustrates a battery pack 100 according to an embodiment of the present disclosure. The battery pack 100 can be loaded into an electric device such as an electric vehicle as a power source, so as to meet the electricity consumption requirements of the electric device.

Exemplarily, the battery pack 100 includes at least one battery module 10, a liquid cooling plate 20, and at least one first limiting member 30. The battery module 10 is an assembly including multiple battery cells. For example, the multiple battery cells are arranged side by side in the same direction, and the multiple battery cells are electrically connected in series or in parallel. In this case, a current of the multiple battery cells can be drawn out to a power consumption unit through a bus bar.

Specifically, the battery cell may be, but not limited to, any one of a cylindrical battery, a square battery, and the like.

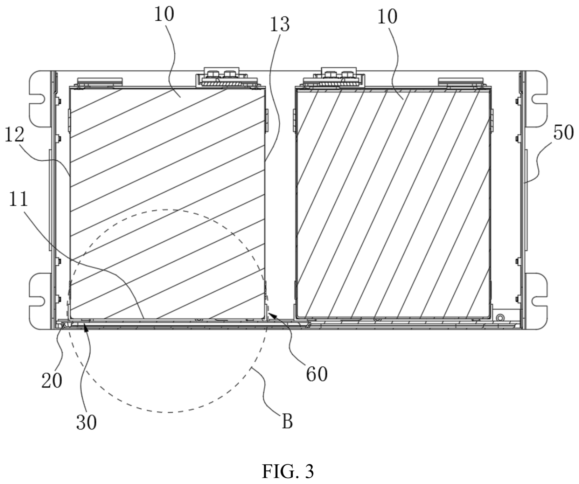

As illustrated in FIG. 3, the liquid cooling plate 20 is mounted on a bottom surface 11 of the at least one battery module 10, and is configured to implement heat management on the at least one battery module 10, that is, to regulate and control a working temperature of the at least one battery module 10. Generally speaking, a flowing coolant flows inside the liquid cooling plate 20, and the coolant absorbs excess heat from the battery module 10 via heat exchange, thereby cooling the battery module 10.

Alternatively, the coolant is a liquid substance such as water or oil.

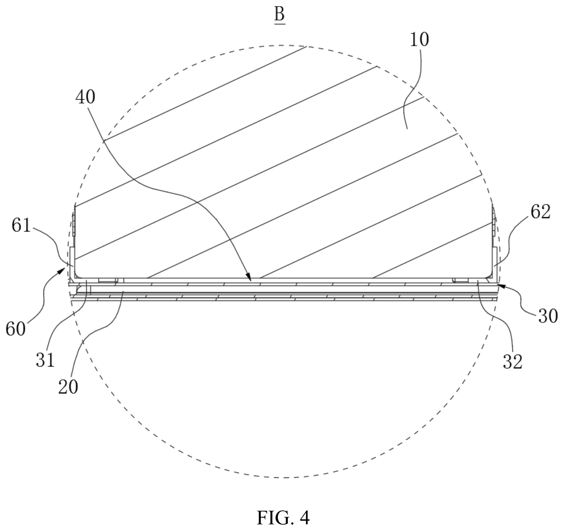

Reference is made to FIGS. 3 and 4 again, each of the at least one first limiting member 30 is installed between the liquid cooling plate 20 and the bottom surface 11 of each of the at least one battery module 10, so that an adhesive gap 40 with a uniform thickness is defined between the liquid cooling plate 20 and the bottom surface 11 of each of at least one battery module 10. A thermal conductive adhesive is applied in the adhesive gap 40, and the liquid cooling plate 20 is in thermal communication with the at least one battery module 10 via the thermal conductive adhesive.

It can be understood that the thermal conductive adhesive generally has better heat transfer performance, which facilitates heat of the battery module 10 being efficiently transferred to the liquid cooling plate 20, thereby enhancing heat dissipation efficiency of the battery module 10. For example, the thermal conductive adhesive may be thermal conductive silica gel.

In conclusion, implementing the technical solution of the embodiment has the following beneficial effects. When the battery pack 100 is assembled, at least one first limiting member 30 is arranged between the bottom 11 of the at least one battery module 10 and the liquid cooling plate 20, the at least one first limiting member 30 supports and limits the upper battery module 10 above, so that an adhesive gap 40 with a uniform thickness can be formed between the bottom surface 11 of the at least one battery module 10 and the liquid cooling plate 20. In this way, it can be ensured that the thickness of the thermal conductive adhesive subsequently applied in the adhesive gap 40 is uniform and consistent, and during operation of the battery back 100, various parts of the at least one battery module 10 can have uniform heat transfer with the liquid cooling plate 20 through the thermal conductive adhesive. As such, the cooling effects of various parts of the at least one battery module 10 are more consistent, thereby guaranteeing the uniformity of heat dissipation and reducing the temperature difference, improving the overall heat management efficiency of the battery pack 10, and guaranteeing the cycle life of the at least one battery module 10.

For example, in this embodiment, each of the at least one first limiting member 30 is arranged at a middle position of the bottom surface and/or arranged at an edge position of the bottom surface. Each of the at least one first limiting member is sandwiched between the battery module and the liquid cooling plate.

In addition, in this embodiment, the first limiting member 30 is made of a plastic material. Since the liquid cooling plate 20 is generally made of aluminum material, and a housing of a battery cell in the battery module 10 is also made of a metal material, the first limiting member 30 made of a plastic material arranged between the liquid cooling plate 20 and the battery module 10 can also increase an electrical gap and enhance the insulation performance. In this way, short circuit between the liquid cooling plate 20 and the battery module 10 can be avoided.

For ease of description of the technical solutions, the following uses an example in which a battery cell is a square battery and the battery module 10 has a square pillar contour as an example for description.

In some embodiments, each of the at least one battery module 10 further has a first side surface 12 and a second side surface 13. The first side surface 12 and the second side surface 13 are vertically connected to two opposite sides of the bottom surface 11 respectively. The first limiting member 30 includes a first supporting member 31 and a second supporting member 32. The first supporting member 31 is arranged at an edge of the bottom surface 11 close to the first side surface 12, and the second supporting member 32 is arranged at an edge of the bottom surface 11 close to the second side surface 13.

After installation, the first supporting member 31 and the second supporting member 32 are respectively located at the edge of the bottom surface 11 close the first side surface 12 and the edge of the bottom surface 11 close to the second side surface 13, so that the battery module 10 is supported by the first supporting member 31 and the second supporting member 32 and is suspended at a certain height above the liquid cooling plate 20. In this case, due to the positioning and supporting functions of the first supporting member 31 and the second supporting member 32, the battery module 10 maintains a stable and parallel positional relationship with the liquid cooling plate 20. As a result, an adhesive gap 40 with a uniform thickness is defined between the bottom 11 of the battery module 10 and the liquid cooling plate 20, thus ensuring consistent adhesive thickness in subsequent adhesive applying processes.

It can be understood that the first supporting member 31 and the second supporting member 32 have structures and functions similar to cushion blocks. The first supporting member 31 and the second supporting member 32 are in surface contact with both the battery module 10 and the liquid cooling plate 20, and have sufficient contact areas, so as to facilitate the bottom surface 11 of the battery module 10 being spaced apart from and parallel to an upper surface of the liquid cooling plate 20. Furthermore, it can be easily understood that, in this case, the width of the adhesive gap 40 is the thickness of each of the first supporting member 31 and the second supporting member 32 (the thicknesses of the first supporting member 31 and the second supporting member 32 are the same). The first supporting member 31 and the second supporting member 32 that have different thicknesses are replaceable, so that the width of the adhesive gap 40 can be flexibly adjusted, and the applied thermal conductive adhesive can meet a preset thickness or heat dissipation performance requirement.

Reference is made to FIGS. 3 to 5 again, the battery pack 100 further includes a second limiting member 60. The second limiting member 60 includes a first protective member 61 and a second protective member 62. The first protective member 61 is arranged at an edge of the first side surface 12 close to the bottom surface 11, and the second protective member 62 is arranged at an edge of the second side surface 13 close to the bottom surface 11. One end of the first protective member 61 is connected to one end of the first supporting member 31. One end of the second protective member 62 is connected to one end of the second supporting member 32. The first protective member 61 and the first supporting member 31 are arranged at an angle, and the second protective member 62 and the second supporting member 32 are arranged at an angle.

In this way, the first protective member 61 and the first supporting member 31 which are arranged at an angle can cooperate to form a corner protection structure, and the second protective member 62 and the second supporting member 32 which are arranged at an angle can cooperate to form a corner protection structure. In this case, both a corner portion formed by the bottom surface 11 and the first side surface 12 and a corner portion formed by the bottom surface 11 and the second side surface 13 can be wrapped, that is, two R-corners (i. e. two corner joints) of a battery cell in the battery module 10 can be wrapped and protected. In this way, when the battery module 10 is packaged, R-corners can be prevented from being damaged due to collision, thereby improving the assembly security.

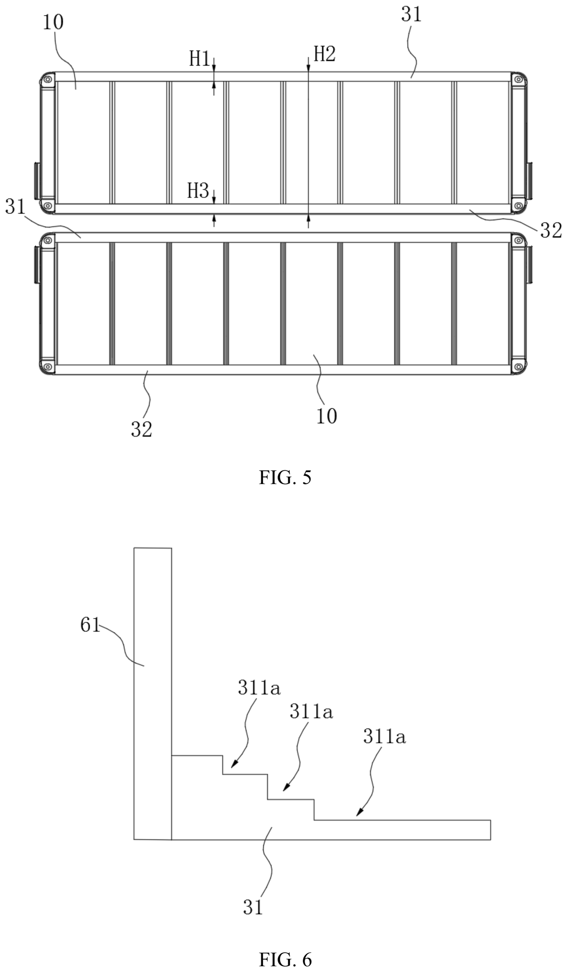

Reference is still made to FIG. 6, still further, at least two tiers of supporting portions 311a are formed on a side surface of each of the first supporting member 31 and the second supporting member 32 facing each of the at least one battery module 10. The heights/thicknesses of adjacent supporting portions 311a successively decrease stepwise, and any one tier of the supporting portion 311a is configured to support and cooperate with the bottom surface 11 to make the width of the adhesive gap 40 adjustable. For battery modules 10 of different specifications, or battery modules 10 having different heating values, the required adhesive thickness also needs to be flexibly adjusted. In this case, supporting portions 311a of different thicknesses support and cooperate with the bottom surface 11 of the battery modules 10, so that adhesive gaps 40 of different widths can be obtained, thereby meeting practical adhesive requirements.

In this embodiment, the supporting portion 311 a preferably has a groove structure with a chamfer. Two vertical side walls can contact the side surfaces (i. e. the first side surface 12 and the second side surface 13) and the bottom surface 11 of the battery module 10 respectively, so as to support the battery module 10 and meet requirements for mounting and positioning of the first supporting member 31 and the second supporting member 32.

Alternatively, as an alternative solution of the above embodiment using the at least two-tier supporting portions 311a, in another embodiment, the first limiting member 30 includes at least two spacers, and each of the at least two spacers has a different thickness. At least a part of the at least two spacers are rotatable to be folded to an outside of the bottom surface 11 of the at least one battery module 10, and at least a part of the at least two spacers are rotatable to be arranged on the liquid cooling plate 20 or the battery module 10. In a working state, any one of the at least two spacers with a required thickness is configured to rotate to be clamped between the bottom surface 11 of the at least one battery module 10 and the liquid cooling plate 20, and remaining spacers are configured to rotate to be folded to the outside of the bottom surface 11 of the at least one battery module 10.

In this way, according to actual needs, a required spacer needs to be rotated to be placed on the bottom surface 11 of the at least one battery module 10 according to different battery modules 10 and different adhesive thicknesses, so that a required adhesive gap 40 is defined between the bottom surface 11 of the at least one battery module 10 and the liquid cooling plate 20, which is flexible, convenient, and fast. The remaining spacers are in a folded state, which can avoid interference on the posture and stability of the battery module 10.

For example, in this embodiment, the at least two spacers have a structure similar to a hinge structure, that is, includes a first leaf, a second leaf, and a pin. One end of the first leaf is connected to the second leaf through the pin. The first leaf is fixedly mounted on the liquid cooling plate 20 or the battery module 10. The second leaf can freely rotate between the bottom surface 11 and the side surface of the battery module 10.

Furthermore, preferably, the spacers are simultaneously mounted on two opposite sides (for example, two opposite sides in a width direction) of the battery module 10, so as to form a more stable support for the battery module 10, thereby ensuring that both the adhesive gap 40 and the adhesive thickness are uniform.

Reference is made to FIG. 5 again, in the present disclosure, in order to avoid interference with a heat transfer effect between the battery module 10 and the liquid cooling plate 20, an area of the bottom surface 11 of the battery module 10 occupied by a supporting leg or the spacer in a working state is small. In other words, a ratio of the width of the first limiting member 30 in the width direction of the battery module 10 to the width of the bottom surface 11 of the battery module 10 is 70%-95%. In this way, it can be ensured that the battery module 10 is in thermal communication with the liquid cooling plate 20 through the thermal conductive adhesive via a sufficiently large exposed region of the bottom surface 11 of the battery module 10, thereby ensuring the heat management effect of the liquid cooling plate 20 on the battery module 10.

Specifically, in FIG. 5, the width of the bottom 11 of the battery module 10 is *H2,* and the width of the first limiting member 30 is equal to the sum of the width of the first supporting member 31 and the width of the second supporting member 32, i. e*., H1+H3.*

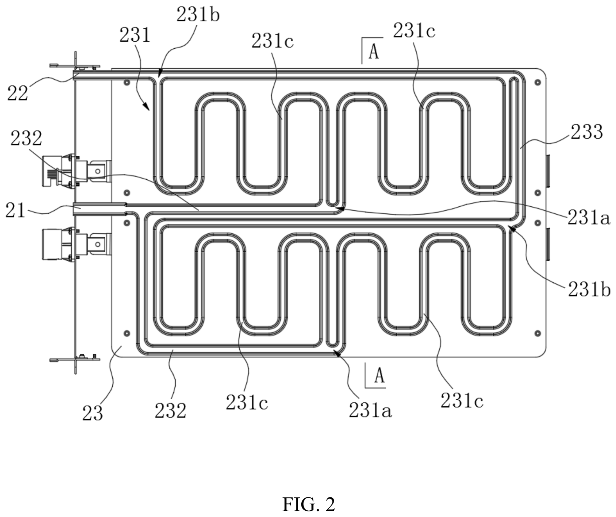

Reference is made to FIGS. 1 and 2 again, on the basis of any embodiment described above, the liquid cooling plate 20 includes a liquid inlet connector 21, a liquid return connector 22, and a plate body 23. At least one cooling flow channel 231 is defined inside the plate body 23, and the at least one cooling flow channel 231 includes at least one liquid inlet 231a and at least one liquid outlet 231b. Each of the at least one liquid inlet 231a is arranged at a middle position or near the middle position in the length direction of each of the at least one battery module 10. The at least one liquid inlet 231a is in communication with the liquid inlet connector 21, the at least one liquid outlet 231b is in communication with the liquid return connector 22, and both the liquid inlet connector 21 and the liquid return connector 22 extend out of the plate body 23.

During operation, the liquid inlet connector 21 and the liquid return connector 22 extend out of an edge of the plate body 23, which facilitate connection to corresponding connectors of a coolant supply device, thereby avoiding interference. The coolant flows to the liquid inlet 231a through the liquid inlet connector 21, and then transfers heat with the battery module 10 during flowing through the cooling flow channel 231, so as to cool the battery module 10. Finally, the coolant after heat absorption flows out of the liquid outlet 231b and finally flows back to the coolant supply device through the liquid return connector 22, so as to achieve recycling, which can improve the resource utilization rate while reducing costs. Furthermore, because the liquid inlet 231a of the cooling flow channel 231 is located at a central position or is arranged near the central position of the battery module 10, the coolant can be ensured to flow through various regions of the bottom surface 11 of the battery module 10 more evenly, thereby improving uniformity of heat transfer, reducing the overall temperature difference of the battery module 10, and improving the cycle life of the battery module 10.

Further, each of the at least one cooling flow channel 231 includes at least two branch flow channels 231c, the at least two branch flow channels 231c are in communication with the liquid inlet 231a, the at least two branch flow channels 231c are arranged in a serpentine configuration and arranged in the length direction of each of the at least one battery module 10, and a total distribution area of all branch flow channels 231c is greater than or equal to the area of the bottom surface 11 of each of the at least one battery module 10. As illustrated in FIG. 4, the structural morphology and layout of two branch flow channels 231c are illustrated. As illustrated in FIG. 2, flow channel inlets of the two branch flow channels 231c are connected and corporately form the liquid inlet 231a, and the liquid inlet 231a is located at a central position of the bottom surface 11 of the battery module 10 and is arranged close to one side edge in the width direction.

In addition, the two branch flow channels 231c are both of a serpentine structure, one of the two branch flow channels 231c is provided throughout a half region of the battery module 10 in the length direction of the battery module 10, and the other one of the two branch flow channels 231c is provided throughout the other half region of the battery module 10 in the length direction of the battery module 10. In this way, a low-temperature coolant can flow into the two branch flow channels 231c at the same time to separately perform targeted cooling on two parts of the battery module 10 in the length direction of the battery module 10. A path of a branch flow channel 231c is short, so that a temperature rise of the coolant can be effectively controlled, thereby achieving an effect of controlling a temperature of each part of the battery module 10 to be consistent. Finally, the coolant converges at outlets of the branch flow channels (two outlets of two branch flow channels corporately form the liquid outlet 231b) and is finally discharged from the liquid return connector 22.

In practical use, in order to meet requirements of large current and long-term endurance use, two or more battery modules 10 are selected to be integrated into one battery pack 100. For example, in some embodiments, at least two battery modules 10 and at least two cooling flow channels 231 are provided and are stacked in a one-to-one correspondence. Multiple cooling flow channels 231 are defined in the plate body 23, multiple drainage flow channels 232 and at least one convergence flow channel 233 are further defined in the plate body 23. The at least one drainage flow channels 232, the at least one liquid inlet 231a, and the at least one cooling flow channel 231 are in communication with each other in a one-to-one correspondence. Two adjacent cooling flow channels 231 are in communication with each other through one convergence flow channel 233.

During operation, the coolant flowing in from the liquid inlet connector 21 can flow into the two cooling flow channels 231 at the same time under the guidance of the drainage flow channel 232, so that different cooling flow channels 231 can achieve targeted cooling and heat dissipation for battery modules 10 correspondingly arranged, so as to satisfy the heat management requirement for two (or more) battery modules 10 loaded in the battery pack 100 at the same time. After that, the coolant is discharged from the cooling flow channels 231 and converged to the convergence flow channel 233, and the convergence flow channel 233 effectively guides the converged coolant to the liquid return connector 22 for discharging. A structure of the above-mentioned flow channel arrangement can ensure the smooth flow of the coolant, and effectively ensure the heat management effect of the liquid cooling plate 20 on the battery modules 10.

Reference is made to FIG. 1 again, and the battery pack 100 further includes a lower case 50. The at least one battery module 10, the liquid cooling plate 20, and at least one first limiting member 30 are all mounted in the lower case 50. The liquid inlet connector 21 and the liquid return connector 22 are exposed beyond or extend out of the lower case 50. In this way, the lower case 50 can load and fix the at least one battery module 10, the liquid cooling plate 20, and the at least one first limiting member 30, thereby improving the integration degree of the battery pack 100 and reducing the occupation of the installation space of the battery pack 100. In addition, the liquid inlet connector 21 and the liquid return connector 22 are exposed out of the lower case 50 or extends out of the lower case 50, thereby facilitating normal connection with corresponding connectors of the coolant supply device.

Various technical features of the described embodiments can be combined in any way. For the sake of brevity, not all possible combinations of the technical features in the aforementioned embodiments have been described. However, as long as there is no contradiction in the combination of these technical features, such combinations shall be considered to fall within the scope of the description.

The foregoing embodiments merely represent several implementations of the present disclosure, and are described in detail, but are not intended to limit the scope of the claims. It may be noted that, for those skilled in the art, various modifications and improvements can be made without departing from the concept of the present disclosure, and all these modifications and improvements belong to the protection scope of the present disclosure. Therefore, the protection scope of the present disclosure should be subject to the appended claims, and the description and accompanying drawings can be used to interpret the contents of the claims.

## Claims

1. A battery pack, comprising:
at least one battery module;
a liquid cooling plate arranged on a bottom surface of the at least one battery module; and
at least one first limiting member, wherein each of the at least one first limiting member is arranged between the liquid cooling plate and a bottom surface of each of the at least one battery module, to define an adhesive gap with a uniform thickness between the liquid cooling plate and the bottom surface of each of the at least one battery module;
wherein a thermal conductive adhesive is applied in the adhesive gap, and the liquid cooling plate is in thermal communication with the at least one battery module via the thermal conductive adhesive.

2. The battery pack of claim 1, wherein each of the at least one first limiting member is arranged at a middle position of the bottom surface, and/or is arranged at an edge position of the bottom surface; and each of the at least one first limiting member is sandwiched between each of the at least one battery module and the liquid cooling plate.

3. The battery pack of claim 1 or 2, wherein each of the at least one battery module further has a first side surface and a second side surface, and the first side surface and the second side surface are vertically connected to two opposite sides of the bottom surface respectively; and
each of the at least one first limiting member comprises a first supporting member and a second supporting member, the first supporting member is arranged at an edge of the bottom surface close to the first side surface, and the second supporting member is arranged at an edge of the bottom surface close to the second side surface.

4. The battery pack of claim 3, wherein the battery pack further comprises a second limiting member; the second limiting member comprises a first protective member and a second protective member, the first protective member is arranged at an edge of the first side surface close to the bottom surface, and the second protective member is arranged at an edge of the second side surface close to the bottom surface; and
one end of the first protective member is connected to one end of the first supporting member, one end of the second protective member is connected to one end of the second supporting member, the first protective member and the first supporting member are arranged at an angle, and the second protective member and the second supporting member are arranged at an angle.

5. The battery pack of claim 3, wherein at least two tiers of supporting portions are formed on a side surface of each of the first supporting member and the second supporting member facing each of the at least one battery module, heights/thicknesses of adjacent supporting portions successively decrease stepwise, and any one tier of a supporting portion is configured to support and cooperate with the bottom surface to make a width of the adhesive gap adjustable.

6. The battery pack of claim 1, wherein each of the at least one first limiting member comprises at least two spacers, each of the at least two spacers has a different thickness, at least a part of the at least two spacers are rotatable to be folded to an outside of the bottom surface of the at least one battery module, and at least a part of the at least two spacers are rotatable to be arranged on the liquid cooling plate or the at least one battery module;
any one of the at least two spacers with a required thickness is configured to be clamped between the bottom surface of the at least one battery module and the liquid cooling plate, and remaining spacers are configured to rotate to be folded to the outside of the bottom surface of the at least one battery module.

7. The battery pack of claim 1, wherein a ratio of a width *H1* of each of the at least one first limiting member in a width direction of a battery module to a width *H2* of a bottom surface of the battery module is within a range of 70% to 95%.

8. The battery pack of claim 1, wherein the liquid cooling plate comprises a liquid inlet connector, a liquid return connector, and a plate body, at least one cooling flow channel is defined inside the plate body, the at least one cooling flow channel comprises at least one liquid inlet and at least one liquid outlet, each of the at least one liquid inlet is arranged at a central position or near the central position in a length direction of each of the at least one battery module, the at least one liquid inlet is in communication with the liquid inlet connector, the at least one liquid outlet is in communication with the liquid return connector, and both the liquid inlet connector and the liquid return connector extend out of the plate body.

9. The battery pack of claim 8, wherein each of the at least one cooling flow channel includes at least two branch flow channels, the at least two branch flow channels are in communication with one of the at least one liquid inlet, the at least two branch flow channels are arranged in a serpentine configuration in the length direction of each of the at least one battery module, a total distribution area of all branch flow channels is greater than or equal to an area of the bottom surface of each of the at least one battery module.

10. The battery pack of claim 8, wherein a plurality of cooling flow channels are defined inside the plate body, the plate body further defines a plurality of drainage flow channels and at least one convergence flow channel, the at least one drainage flow channel, the at least one liquid inlet, and the plurality of cooling flow channel communicate in a one-to-one correspondence, and two adjacent cooling flow channels communicate with each other through one of the at least one convergence flow channel.

11. The battery pack of claim 10, wherein the battery pack further comprises a lower case, the at least one battery module, the liquid cooling plate, and the at least one first limiting member are all mounted in the lower case, and the liquid inlet connector and the liquid return connector both extend out of the lower case.
